# EUROPEAN PATENT SPECIFICATION

(11) **EP 2 311 716 B1**
(45) Date of publication and mention of the grant of the patent: **06.08.2014**
(21) Application number: 10187483.2
(22) Date of filing: 14.10.2010
(51) Int. Cl.: B62J 9/00, B62J 17/06, B60R 7/04

(54) **Motorcycle having inner pocket**
Motorrad mit Innentasche
Motocyclette dotée d'une poche intérieure

(30) Priority: 05.02.2010 JP 2010024207; 19.10.2009 JP 2009240024
(43) Date of publication of application: 20.04.2011
(73) Proprietor: Yamaha Hatsudoki Kabushiki Kaisha (Yamaha Motor Co., Ltd.), Shizuoka 438-8501 (JP)
(72) Inventor: Ohzono, Gen, Iwata-shi, Shizuoka 438-8501 (JP)
(74) Representative: Grünecker, Kinkeldey, Stockmair & Schwanhäusser

(56) References cited:
- GB-A- 786 323
- JP-A- 11 198 878
- JP-A- 58 149 873
- JP-A- H11 152 068
- JP-A- 2000 219 178
- JP-A- 2008 189 179
- US-A- 4 198 093
- US-A- 4 557 345
- US-A- 4 807 919
- US-A1- 2005 155 804
- US-A1- 2006 037 798
- US-A1- 2008 030 041

## Description

The present invention relates to motorcycles, and more specifically, to a motorcycle having an inner pocket.

JP 2006-036013 A discloses a motorcycle having an inner rack (inner pocket). In the motorcycle, a front cover, an upper inner panel, and a lower inner panel form a leg shield used to cover the front part of the legs of a rider on a seat. The inner rack is formed behind the leg shield in the vehicle front-back direction (see Paragraph 0012). The inner rack has its maximum width in the vehicle widthwise direction, so that a large size item can be stored therein (see Paragraph 0018).

In the motorcycle as described above, there has been a demand for an inner rack with a greater capacity so that the inner rack could be easier to use. However, if the width of the inner rack in the vehicle widthwise direction is further increased in order to increase the capacity of the inner rack, rain water can more easily come into the inner rack.

It is an object of a preferred embodiment of the present invention to provide an inner pocket having a large capacity that is unlikely to allow rain water to enter.

US 2008/0030041 shows a motorcycle according to the preamble of claim 1.

A motorcycle according to the present invention includes a head pipe, a front frame, an inner pocket, a front cover, and a pocket cover. The front frame extends backward and downward from the head pipe. The inner pocket is provided around the head pipe. The front cover is attached to cover front portions of the head pipe and the front frame. The pocket cover is connected to the front cover to extend from the front cover and form an outer wall of the inner pocket. A surface of the front cover and a surface of the pocket cover form substantially the same surface. The front cover includes a cutwater ridgeline. The cutwater ridgeline is positioned in front of a boundary between the front cover and the pocket cover. The cutwater ridgeline extends in an up-down direction when viewed from the front of the motorcycle.

Further features of the invention are defined in the characterizing portion of claim 1.

According to the preferred embodiment of the present invention, a motorcycle having an inner pocket with a large capacity that is unlikely to allow rain water to enter can be provided.

Other features, elements, steps, characteristics and advantages of the present invention will become more apparent from the following detailed description of preferred embodiments of the present invention with reference to the attached drawings.
Fig. 1 is a left side view of a motorcycle according to a preferred embodiment of the present invention.
Fig. 2 is a perspective view of a front cover, a pocket cover, an inner cover, and the like in the motorcycle in Fig. 1 when viewed from the upper left behind of the motorcycle.
Fig. 3 is a shaded perspective view of Fig. 2.
Fig. 4 is a perspective view of the front cover, the pocket cover, the inner cover, and the like in the motorcycle shown in Fig. 1 when viewed from the upper left front of the motorcycle.
Fig. 5 is a left side view of the front cover, the pocket cover, the inner cover, and the like shown in Fig. 1.
Fig. 6 is a shaded left side view of Fig. 5
Fig. 7 is a right side view on the opposite side to Fig. 6.
Fig. 8 is a front view of the inner cover, the pocket cover, and the like in the motorcycle shown in Fig. 1 when viewed from the position of a leg space.
Fig. 9 is a side view of the front cover shown in Fig. 5.
Fig. 10A is a plan view of the pocket cover shown in Fig. 5 and Fig. 10B is a side view thereof.
Fig. 11A is a sectional view taken along line XI-XI in Fig. 5 and Fig. 11B is a partly enlarged sectional view Fig. 11A.
Fig. 12 is a sectional view taken along line XII-XII in Fig. 5.
Fig. 13 is a sectional view taken along line XIII-XIII shown in Fig. 5.
Fig. 14 is a sectional view taken along line XIV-XIV in Fig. 5.
Fig. 15 is a sectional view taken along line XV-XV shown in Fig. 5.
Fig. 16 is a left side view of the pocket cover, the front cover, and the inner cover similarly to Fig. 5.
Fig. 17 is a front view of the motorcycle shown in Fig. 1.
Fig. 18 is a rear view of another embodiment of the pocket cover shown in Fig. 2.

A preferred embodiment of the present invention will be described in detail in conjunction with the accompanying drawings in which the same or corresponding elements are designated by the same reference characters and their description will not be repeated.

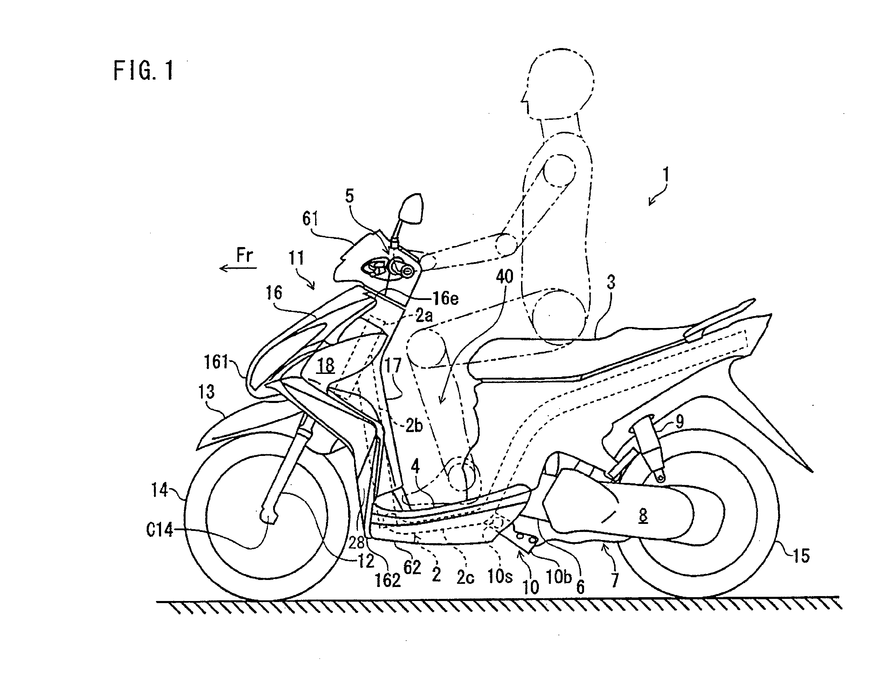

As shown in Fig. 1, a motorcycle 1 according to a preferred embodiment of the present invention is a scooter type motorcycle. However, the motorcycle 1 is not limited to the scooter type and may be a moped type motorcycle. The motorcycle 1 includes a space 40 in which a rider places his/her legs (hereinafter referred to as the "leg space"). The vehicle body frame 2 of the scooter type motorcycle 1 has a front frame 2b that extends backward and downward from a head pipe 2a and a rear frame 2c that extends backward from a lower portion of the front frame 2b. An engine 6 is fixed under the vehicle body frame 2. The motorcycle typically has two wheels but it may include three or more wheels.

In the following description, the front, back, left, right, top, bottom, and the like refer to these direction as seen from a rider seated on a seat 3. The vehicle widthwise direction refers to the direction that extends from the left to the right of the vehicle body. In the drawings, Fr indicates the front of the vehicle body.

The motorcycle 1 includes the vehicle body frame 2 and the seat 3. The vehicle body frame 2 includes the head pipe 2a, the front frame 2b, and the rear frame 2c. The front frame 2b extends backward and downward from the head pipe 2a. The rear frame 2c extends backward from the front frame 2b. The seat 3 is provided above the rear frame 2c.

As shown in Fig. 1, in the motorcycle 1, the leg space 40 is formed between the seat 3 and the head pipe 2a when viewed from the side of the motorcycle 1. The leg space 40 is formed behind a front cover 16. The rider's legs are placed at the leg space 40 in other words behind the front cover 16. The motorcycle 1 includes a footboard 4. The footboard 4 is provided above the rear frame 2c. A front portion of the footboard 4 is positioned ahead of the seat 3. The rider's legs can be placed at the footboard 4. The rider's legs are supported at the footboard 4 while the motorcycle 1 travels.

The motorcycle 1 includes a front wheel 14 and a rear wheel 15 that are provided on the front and rear sides of the vehicle body, respectively. The front wheel 14 is supported rotatably at the lower end of a front fork 12. Although not shown, the front fork 12 is allowed to rotate by the head pipe 2a. A handle 5 is provided at the upper end of the front fork 12. A front fender 13 is provided above the front wheel 14. The front fender 13 covers the upper part of the front wheel 14.

The motorcycle 1 includes a power unit 7. The power unit 7 is provided under the seat 3. The power unit 7 includes the engine 6 and a transmission case 8. The transmission case 8 stores a power transmission mechanism used to transmit the power of the engine 6 toward the rear wheel 15 and supports the rear wheel 15. As shown in Fig. 1, the transmission case 8 is provided on the left side of the vehicle body. However, the transmission case 8 may be provided on the right side of the vehicle body.

The engine 6 is a water-cooled, single cylinder four cycle engine. The cylinder axial line of the engine 6 extends in the front-back direction. However, the form of the engine 6 is not particularly limited. The engine 6 may be an air-cooled engine or a multi-cylinder engine.

The power unit 7 is a so-called unit swing type unit and swings together with the rear wheel 15 in the vertical direction around a pivot shaft 10s. The power unit 7 is supported swingably at the vehicle body frame 2 through a link mechanism 10. The link mechanism 10 includes the pivot shaft 10s and a link member 10b. The link member 10b is provided between the vehicle body frame 2 and the transmission case 8. A buffer device 9 is provided between the power unit 7 and the rear frame 2c.

The motorcycle 1 includes a cover 11. The cover 11 is connected to a front portion of the footboard 4 and covers the front frame 2b. The cover 11 has the front cover 16, an inner cover 17, and a pocket cover 18. The front cover 16 is attached to cover the front portions of the head pipe 2a and the front frame 2b. The inner cover 17 is attached to cover the rear portions of the head pipe 2a and the front frame 2b and connected to the front cover 16.

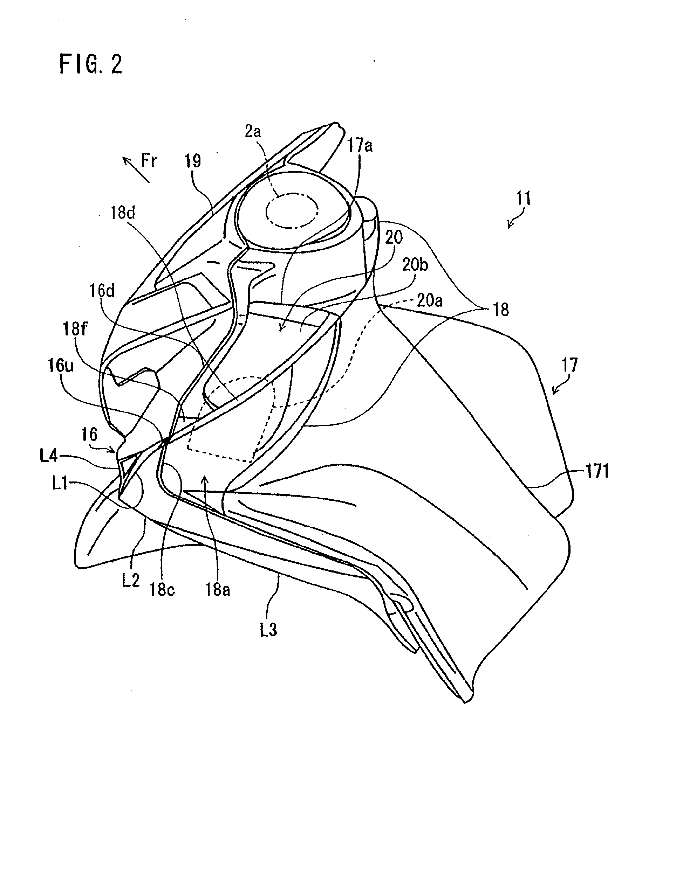

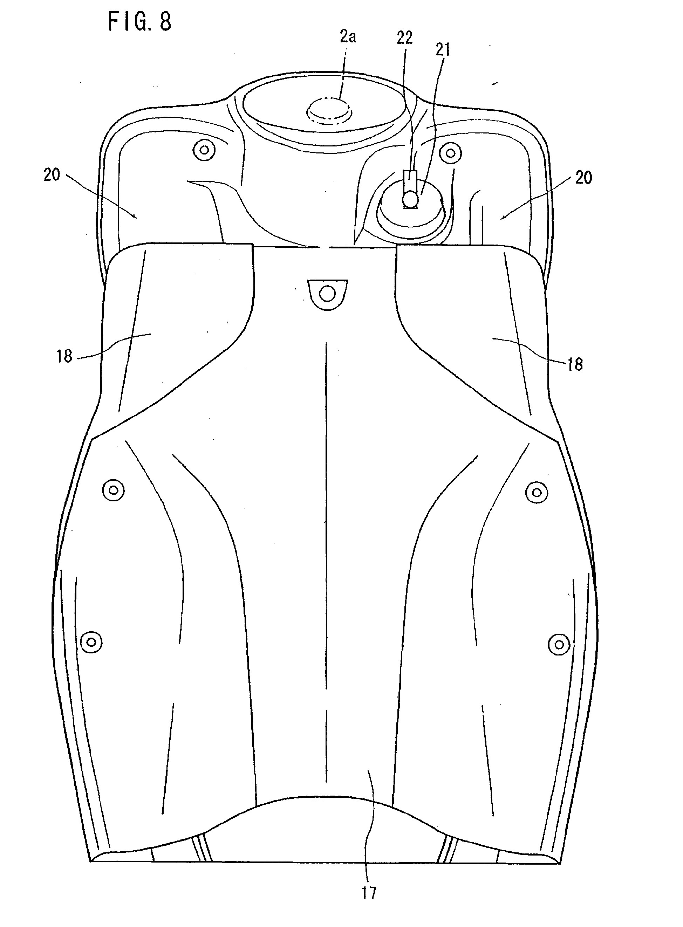

As shown in Figs. 2 to 8, the motorcycle 1 includes an inner pocket 20. The inner pocket 20 is provided around the head pipe 2a. More specifically, the inner pocket 20 is provided on the right and left sides of the head pipe 2a. The pocket cover 18 is connected to the front cover 16 and extends backward from the front over 16 to form the outer wall 18a of the inner pocket 20. The pocket cover 18 is curved inward in the vehicle widthwise direction and further extends toward the center of the vehicle (see Fig. 8). However, the pocket cover 18 does not extend to the rear of the head pipe 2b. The inner pocket 20 has an opening 20b open upward. Small items can be stored in the inner pocket 20 through the opening 20b. The inner pocket 20 is a space or a box used to store small items. The bottom 20a of the inner pocket 20 is a part of the inner cover 17. However, the bottom 20a may be a part of the pocket cover 18.

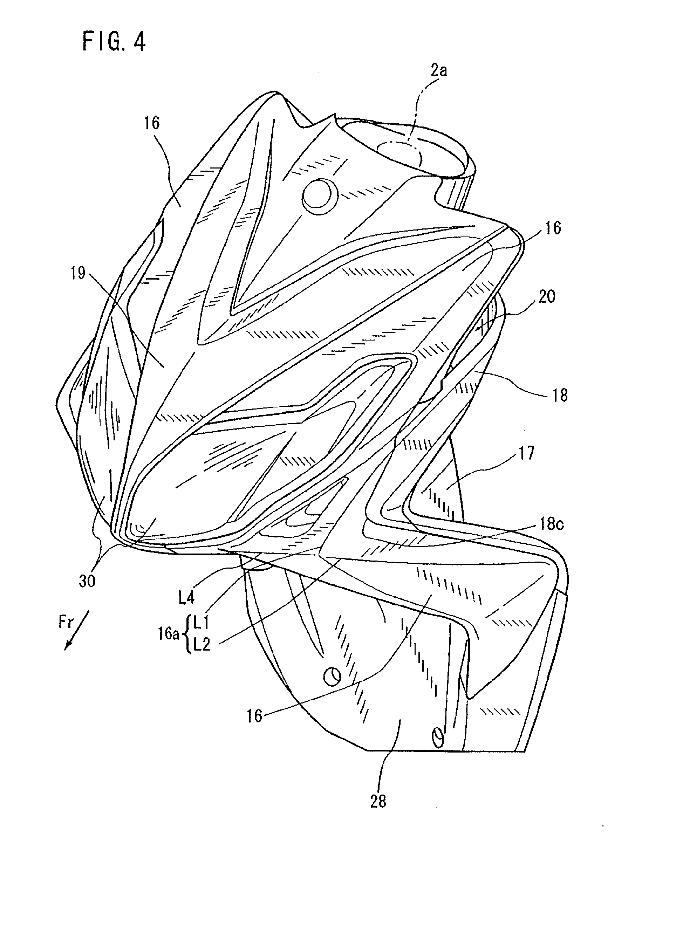

As shown in Fig. 4, a front panel 19 is attached to the front surface of the front cover 16. The front cover 16 is provided with a light unit 30. The front panel 19 is attached at the front surface of the front cover 16 to partly cover the front surface of the light unit 30.

As shown in Fig. 1, the front cover 16 and the inner cover 17 are provided under a handle cover 61. The upper portion of the front cover 16 is inclined backward when viewed from the side of the motorcycle 1. The front end 161 of the front cover 16 is positioned ahead of the rotation center C14 of the front wheel 14. The lower end 162 of the front cover 16 is positioned below the rotation center C14 of the front wheel 14. As shown in Figs. 1 and 4, the motorcycle 1 includes an inner fender 28. The inner fender 28 is positioned behind the front wheel 14 to prevent mud, etc. from being splashed. The inner fender 28 is connected to the inner cover 17. The front cover 16 extends downward and covers a part of the side of the inner fender 28. The side of the inner fender 28 is exposed through the front cover 16 and extends downward. The lower end 162 of the inner fender 28 is positioned under the lower end of the inner cover 17. However, the side of the inner fender 28 may be formed integrally with the front cover 16. The front cover 16 may extend to the lowermost end instead of the side of the inner fender 28.

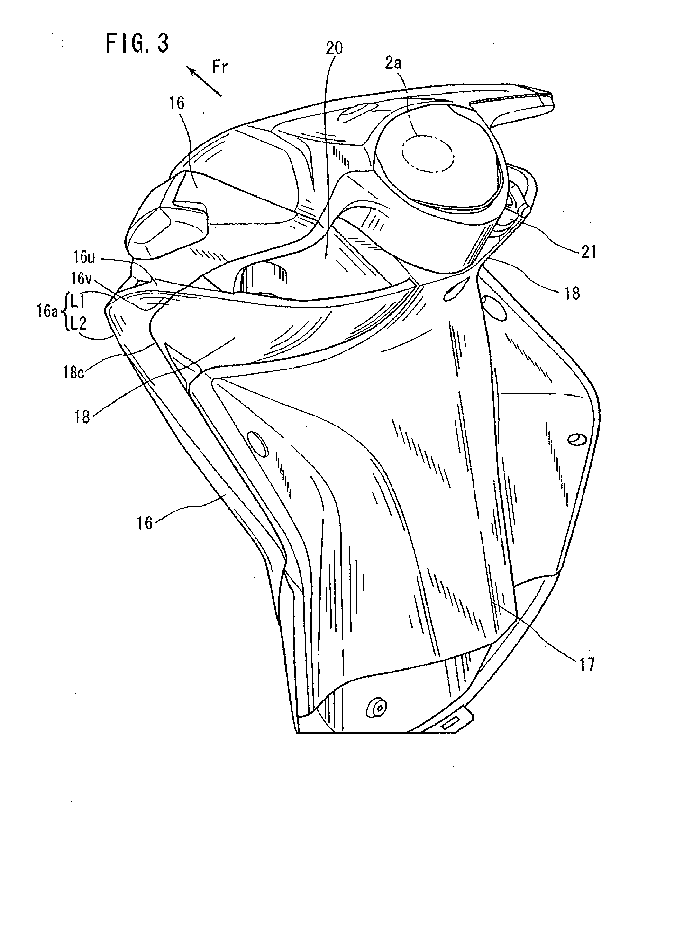

The top of the front cover 16 is generally curved (see Figs. 3 to 6). As shown in Fig. 2, the inner cover 17 has a raised portion 171 raised toward the back in the center of the vehicle width wise direction. As shown in Figs. 1 and 2, the front frame 2b is positioned between the raised portion 171 and the front cover 16. The inner cover 17 partitions the leg space 40.

As shown in Fig. 1, the footboard 4 extends approximately horizontally from the lower end of the inner cover 17 toward the back. A side cover 62 is attached to the edge of the footboard 4 to extend downward from the edge.

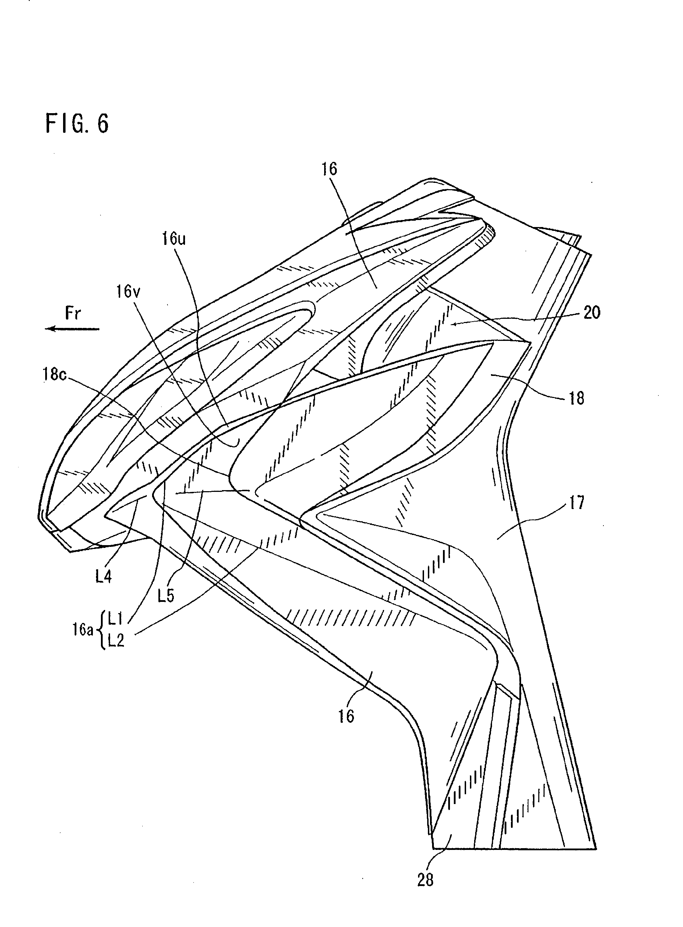

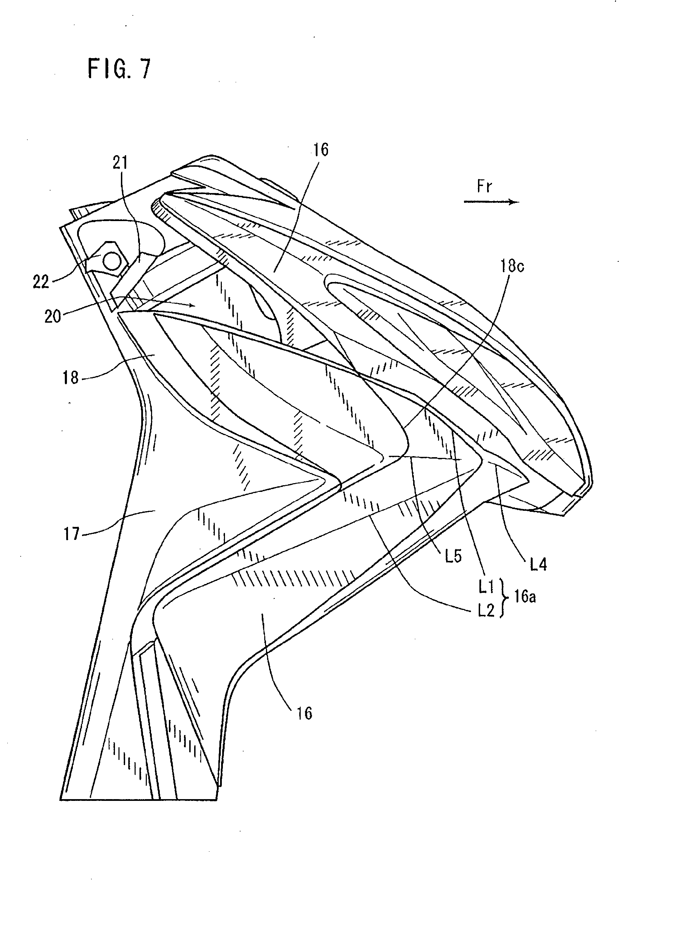

As shown in Fig. 7, the right side of the front portion shown in Fig. 6 is substantially symmetrical with the left side. However, as shown in Figs. 7 and 8, a key shutter 21 is provided more on the inner side than the right inner pocket 20 in the vehicle widthwise direction. As shown in Figs. 7 and 8, a key 22 is inserted in the key shutter 21. As shown in Fig. 8, a pair of pocket covers 18 is provided on the left and right of the vehicle body.

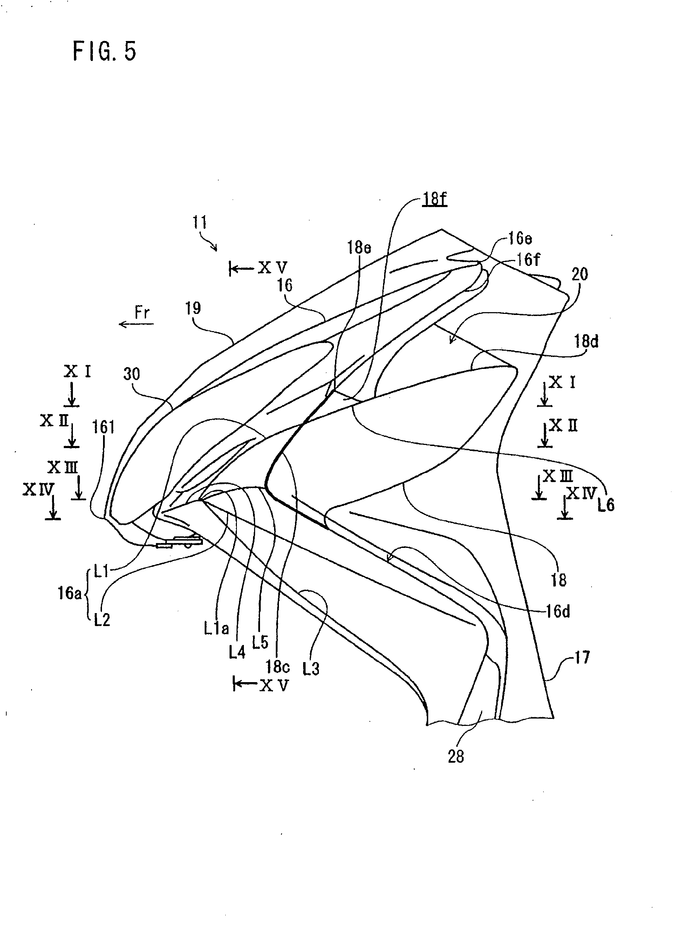

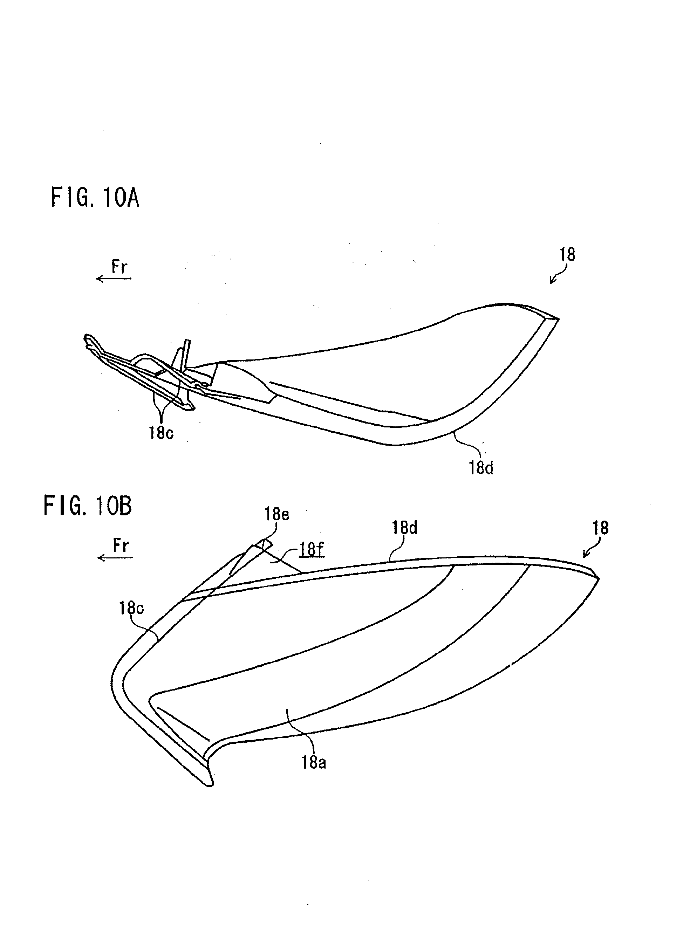

As shown in Fig. 5, the pocket cover 18 has a connection portion 18c connected to the front cover 16. As shown in Figs. 2 and 10B, the pocket cover 18 has an outer wall 18a. The outer wall 18a extends backward from the connection portion 18c and is curved inward in the vehicle widthwise direction. The connection portion 18c refers to a portion of the edge of the pocket cover 18 connected to the front cover 16. In Fig. 5, the connection portion 18c of the pocket cover 18 is indicated by a thick line. As shown in Figs. 10A and 10B, the connection portion 18c is formed by the front edge of the pocket cover 18. More specifically, the front portion of the pocket cover 18 is connected to the front cover 16.

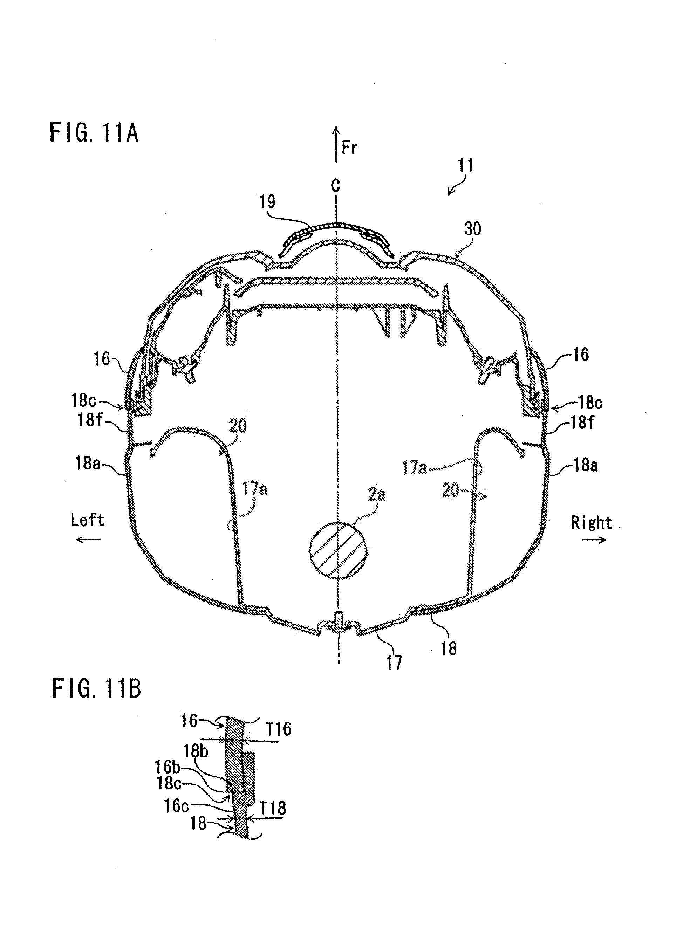

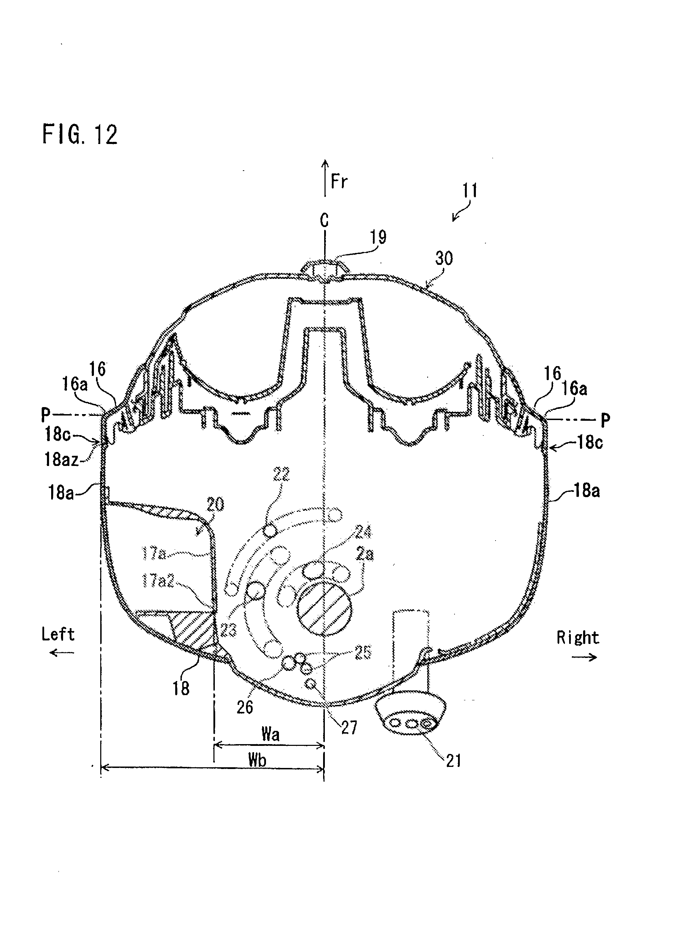

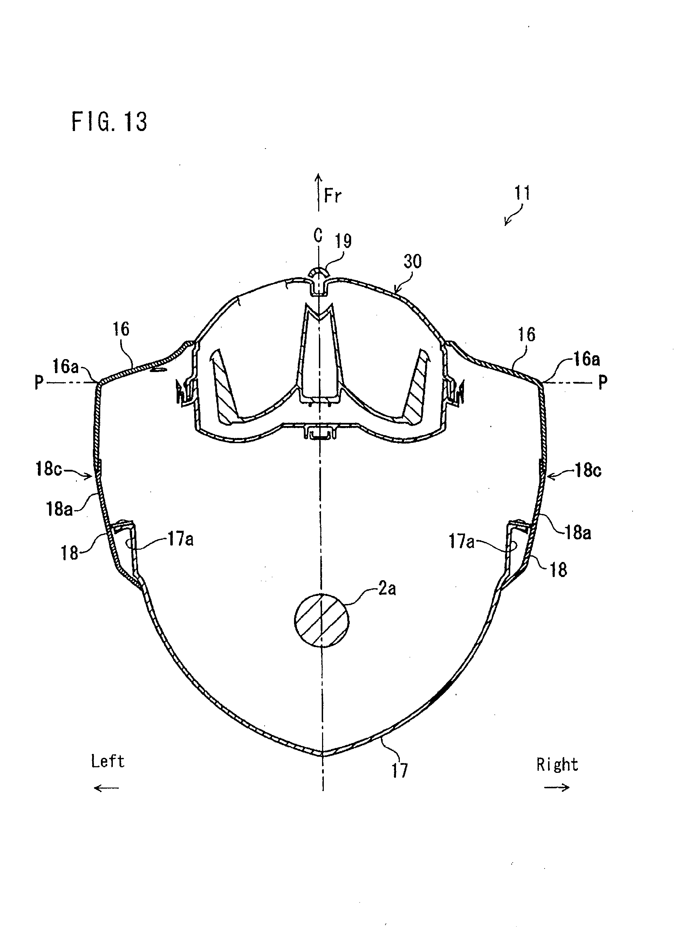

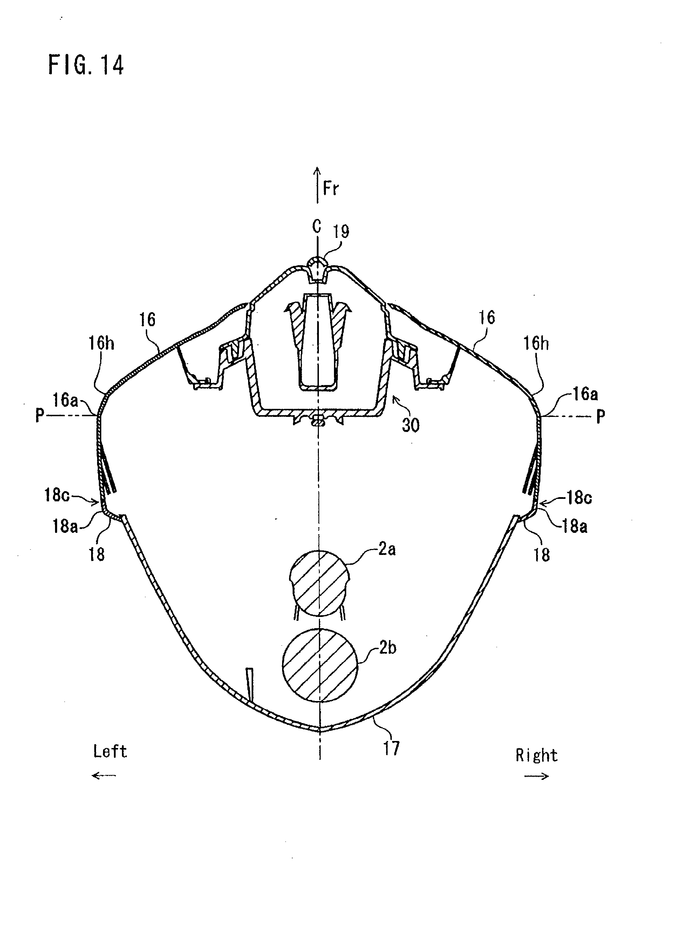

Fig. 11A is a sectional view taken along line XI-XI in Fig. 5. Fig. 12 is a sectional view taken along line XII-XII in Fig. 5. Fig. 13 is a sectional view taken along line XIII-XIII in Fig. 5. Fig. 14 is a sectional view taken along line XIV-XIV in Fig. 5.

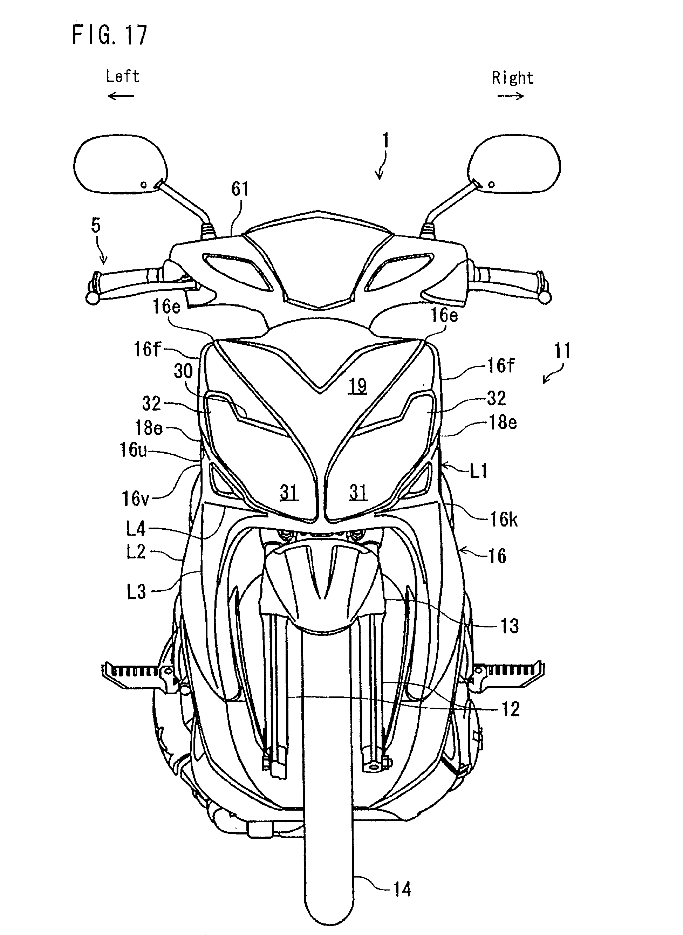

As shown in Figs. 12 to 14, the front cover 16 includes a cutwater ridgeline 16a positioned in front of the connection portion 18c of the pocket cover 18. Here, the connection portion 18c of the pocket cover 18 corresponds to the boundary between the front cover 16 and the pocket cover 18. The cutwater ridgeline 16a projects angularly outward in the widthwise direction in the front cover 16. More specifically, as shown in Fig. 17, the cutwater ridgeline 16a forms the contour or outline of the front cover 16 when viewed from the front of the motorcycle 1. As shown in Fig. 5, the cutwater ridgeline 16a has ridgelines L1 and L2. As shown in Fig. 14, the front cover 16 has a bent portion 16h positioned in front of the cutwater ridgeline 16a. The bent portion 16h projects forward and outward in the vehicle widthwise direction in a horizontal section of the cover 11. A part of the ridgeline L3 that will be described is formed by the bent portion 16h.

Rain water on the front cover 16 and mud water and the like splashed by the front wheel 14 are made to flow from the front to the back by airflow generated while the vehicle travels. The cutwater ridgeline 16a has an angular form outward in the vehicle widthwise direction. Rain water, mud water, and the like coming from the front are separated from the front cover 16 by the cutwater ridgeline 16a. Therefore, rain water, mud water, and the like coming from the front of the cutwater ridgeline 16a can be prevented from further flowing backward beyond the cutwater ridgeline 16a.

As shown in Figs. 12 to 14, the cover 11 has a cutwater portion P for rain water or the like. The cutwater portion P can remove rain water or the like running on the outer surface of the front cover 16 toward the back from the front cover 16 in the backward direction and outward in the vehicle widthwise direction. At the horizontal section of the cover 11, the cutwater portion P is formed by the cutwater ridgeline 16a. The horizontal section of the cover 11 is a section of the cover 11 taken in the horizontal direction to the ground surface while the motorcycle 1 stands vertically on the ground surface (in the state as shown in Fig. 1).

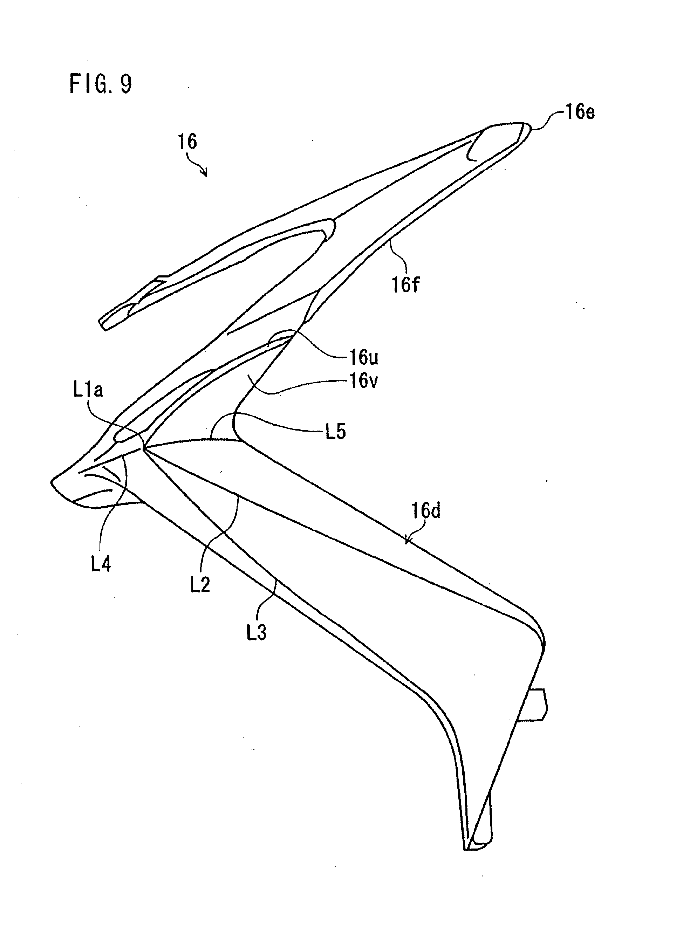

As shown in Figs. 5 and 9, the cutwater ridgeline 16a includes the ridgeline L1 of the front cover 16 when viewed from the side of the motorcycle 1. The ridgeline L1 extends backward and upward when viewed from the side of the motorcycle 1. The cutwater ridgeline 16a includes the ridgeline L2 of the front cover 16 in addition to the ridgeline L1. The ridgeline L2 extends backward and downward when viewed from the side of the motorcycle 1. The ridgeline L2 is connected to the ridge line L1 at its front end L1a. The front end L1a of the ridgeline L1 is a lower end of the ridgeline L1 and coincides with the front end and upper end of the ridgeline L2. The ridgeline L2 extends backward and downward from the front end L1a of the ridgeline L1 when viewed from the side of the motorcycle 1.

The front cover 16 has ridgelines L3 and L4 in addition to the ridgelines L1 and L2. The ridgeline L3 extends backward and downward from the front end L1a of the ridgeline L1 under the ridgeline L2. The ridgeline L4 extends forward and downward from the front end L1a of the ridgeline L1. The ridgelines L3 and L4 are different from the cutwater ridgeline 16a. As shown in Fig. 5, the front end of the ridgeline L4 is positioned behind the front end of the front cover 16.

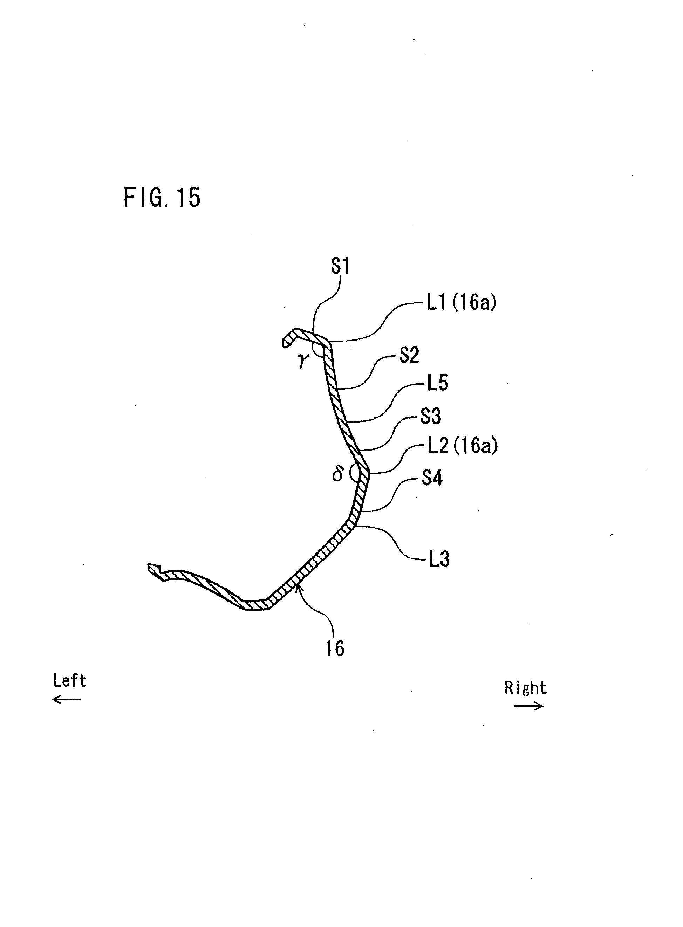

As shown in Figs. 5 and 9, the front cover 16 has a trough line L5. The trough line L5 is formed between the ridgelines L1 and L2 and extends backward from the front end L1a of the ridgeline L1. More specifically, the trough line L5 is a line formed by portions of the front cover 16 that are curved inward in the vehicle widthwise direction and connected in a line. As shown in Fig. 15, the part of the front cover 16 between the ridgelines L1 and L2 is recessed inward in the vehicle widthwise direction. In this way, the trough line L5 is formed at the portion of the front cover 16 between the ridgelines L1 and L2. The trough line L5 may be formed by the portion of the front cover 16 between the ridgeline L1 and L2 bent inward in the vehicle widthwise direction.

Rain water or the like running under the front cover 16 near the road surface and the front wheel 14 (see Fig. 1) is removed from the front cover 16 by the cutwater ridgeline 16a that forms the ridgeline L2. Rain water or the like running at the front portion of the front cover above the front wheel 14 is removed from the front cover 16 by the cutwater ridgeline 16a that forms the ridgeline L1. As shown in Fig. 15, the trough line L5 is formed between the ridgelines L1 and L2, so that the angle γ formed between sides S1 and S2 and the angle δ formed between the sides S3 and S4 are reduced.

The front cover 16 and the pocket cover 18 are smoothly connected and substantially no step is formed at the connection portion 18c. More specifically, the surface of the front cover 16 and the surface of the pocket cover form substantially the same surface. As shown in Figs. 11A and 11B to Fig. 14, the front cover 16 and the pocket cover 18 both have a thickness. The thickness of the front cover 16 and the thickness of the pocket cover 18 correspond to the width in the widthwise direction at the connection portion 18. More specifically, as shown in Fig. 11B, the pocket cover 18 has a thickness T18 at the connection portion 18c. The front cover 16 has a thickness T16 at the part connected to the connection portion 18c. At the connection portion 18c, the outer end 18b of the pocket cover 18 is positioned between the inner end 16c and the outer end 16b of the front cover 16 with respect to the vehicle widthwise direction. At the connection portion 18c, the outer end 16b of the front cover 16 may be positioned between the inner end 18c and the outer end 18b of the pocket cover 18 with respect to the vehicle widthwise direction. In this way, the front cover 16 and the pocket cover 18 are connected at the connection portion 18c substantially with no step. The thickness T16 of the front cover 16 and the thickness T18 of the pocket cover 18 may be substantially same or different for their entire lengths.

The surface of the front cover 16 and the surface of the pocket cover 18 forming substantially the same surface specifically means that substantially no step exists at the connection portion 18c. When substantially no step exists at the connection portion 18c, rain water or the like on a part behind the cutwater ridgeline 16a of the front cover 16 moves to the surface of the pocket cover 18 from the surface of the front cover 16 when the motorcycle travels normally. The surface of the front cover 16 and the surface of the pocket cover 18 do not have to form completely the same surface, and there may be a small step between them. More specifically, a step about as large as the thickness T16 of the front cover 16 or the thickness T18 of the pocket cover 18 may be generated during the process of attaching the front cover 16 and the pocket cover 18. However, the step is preferably small enough for rain water or the like to move from the surface of the front cover 16 to the surface of the pocket cover 18.

As shown in Fig. 5, the front cover 16 is connected to the inner cover 17 and the pocket cover 18 at the connection portion 16d. The connection portion 16d is a part of the front cover 16. A part of the connection portion 16d is connected to the pocket cover 18 and another part is connected to the inner cover 17. As shown in Fig. 2, the rear edge of the front cover 16 is connected to the inner cover 17 and the pocket cover 18. The rear edge of the front cover 16 forms the connection portion 16d. As shown in Fig. 9, the connection portion 16d of the front cover 16 extends in the up-down direction when viewed from the side of the motorcycle 1. The up-down direction herein refers to not only the vertical direction in a strict sense but also to an obliquely up-down direction. The connection portion 16d of the front cover 16 is approximately S-shaped when viewed from the side.

As shown in Figs. 5 and 9, the connection portion 16d of the front cover 16 includes a rearmost portion 16e and a side edge 16f that extends forward and downward from the rearmost portion 16e. As shown in Fig. 1, the rearmost portion 16e is positioned above the seat 3 when viewed from the side of the motorcycle 1. As shown in Figs. 5 and 10B, the pocket cover 18 has a top edge 18d. The top edge 18d extends backward and upward from the ridgeline L1 when viewed from the side of the motorcycle 1 and is curved backward and inward in the vehicle widthwise direction to form an opening 20b in the pocket cover 18.

The pocket cover 18 has an intermediate portion 18f. The intermediate portion 18f is positioned adjacent to the connection portion 16d of the front cover 16. The intermediate portion 18f has an approximately triangular shape when viewed from the side. The left side of the intermediate portion 18f shown in Fig. 5 forms a part of the connection portion 18c. The side extends forward and obliquely downward from the front end 18e of the top edge 18d. The right side of the intermediate portion 18f shown in Fig. 5 forms a part of the top edge 18d. The side extends backward and obliquely downward from the front end 18e of the top edge 18d of the pocket cover 18. The intermediate portion 18f is positioned more on the inner side in the vehicle widthwise direction than the ridgeline L1 of the front cover 16 (see Figs. 2 and 11A). The opening 20b is also positioned more on the inner side in the vehicle widthwise direction than the ridgeline L1 of the front cover 16. As shown in Fig. 5, the contour line L6 of the pocket cover 18 extends on an extended line from the ridgeline L1 of the front cover 16. More specifically, the contour line L6 is substantially continuous with the ridgeline L1 of the front cover 16. The front end of the contour line L6 is positioned at the connection portion 18c. The contour line L6 consists of a part of the top edge 18d of the pocket cover 18 and the lower side of the intermediate portion 18f. Note however the shape of the intermediate portion 18f is not limited to the approximately triangular shape. The contour line L6 is connected to the ridgeline L1 substantially with no step.

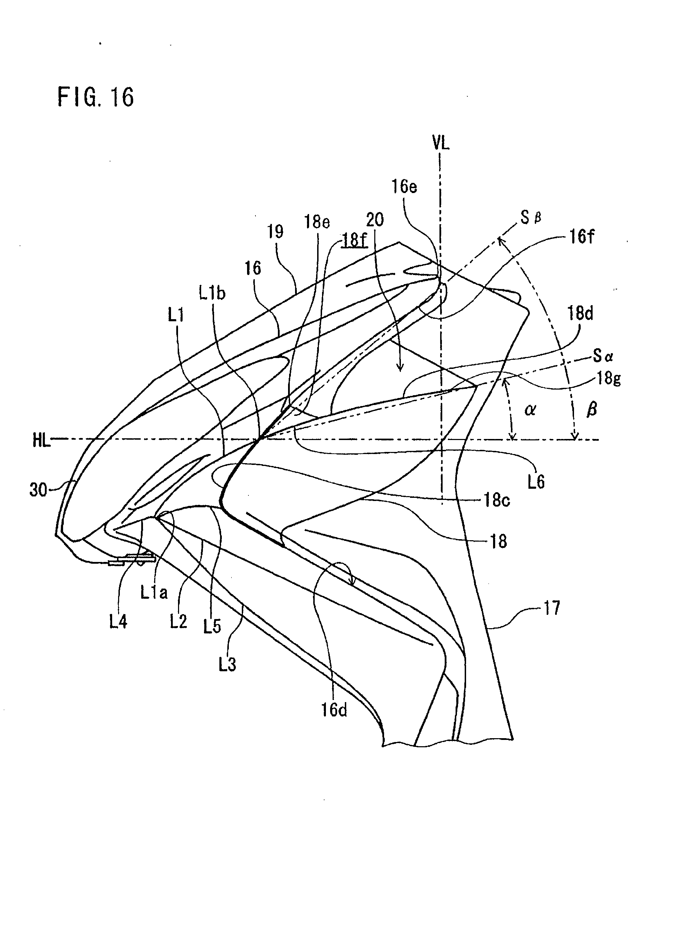

As shown in Fig. 16, when viewed from the side of the motorcycle 1, the top edge 18d of the pocket cover 18 extends backward and upward at an elevation angle α. The side edge 16f of the front cover 16 extends backward and upward at an elevation angle β. The direction in which the side edge 16f extends is above the direction in which the top edge 18d extends. More specifically, the elevation angle α is smaller than the elevation angle β. A virtual line HL in Fig. 16 represents the horizontal line passing through the rear end L1b of the ridgeline L1. A straight line that extends at the elevation angle α along the top edge 18d of the pocket cover 18 is defined as "line Sα." A straight line that extends at the elevation angle β along the side edge 16f of the front cover 16 is defined as "line Sβ."

The top edge 18d of the pocket cover 18 includes a portion 18g positioned behind the rearmost portion 16e when viewed from the side of the motorcycle 1. A virtual line VL shown in Fig. 16 represents the vertical line passing through the rearmost portion 16e. In Fig. 16, the portion 18g of the top edge 18d on the right of the vertical line VL is positioned behind the rearmost portion 16e.

The front end 18e of the top edge 18d of the pocket cover 18 is connected to the side edge 16f of the front cover 16 (see Figs. 10B and Fig. 16). The side edge 16f of the front cover 16 has a portion positioned above the front end 18e of the top edge 18d of the pocket cover 18 and more on the outer side than the top edge 18d of the pocket cover 18 in the vehicle widthwise direction. The side edge 16f of the front cover 16 projects entirely or partly more outward in the vehicle widthwise direction than the top edge 18d of the pocket cover 18 so as to cover the top edge 18d of the pocket cover 18 when viewed from the front of the motorcycle 1. Referring to Figs. 16 and 17, the top edge 18d of the pocket 18 is hidden by the front cover 16 when viewed from the front of the motorcycle 1.

According to the present preferred embodiment, the vehicle widthwise direction refers to the left-right direction. Therefore, as shown in Fig. 17, the outer side in the vehicle widthwise direction on the right side of the motorcycle 1 corresponds to the left side in Fig. 17. On the right side of the motorcycle 1, the inner side in the vehicle widthwise direction corresponds to the right side in Fig. 17. As shown in Fig. 17, on the left side of the motorcycle 1, the outer side in the vehicle widthwise direction corresponds to the right side in Fig. 17. On the left side of the motorcycle 1, the inner side refers to the left side in Fig. 17.

As shown in Figs. 16 and 17, the motorcycle 1 includes a light unit 30. The light unit 30 is exposed from the front cover 16. Referring to Figs. 1 and 17, the seat 3 is hidden by the cover 11 when viewed from the front of the motorcycle 1. More specifically, the cover 11 has a width greater than that of the seat 3. The widest width of the light unit 30 is greater than the widest width of the seat 3. The light unit 30 includes left and right headlights 31 and left and right flashers 32. The left headlight 31, the left flasher 32, the right headlight 31, and the right flasher 32 are integrated. However, the left headlight 31 and the left flasher 32 may be integrated and the right headlight 31, and the right flasher 32 may be integrated. More specifically, the light unit 30 may be separated into the left and right portions.

The ridgeline L1 extends in the up-down direction when viewed from the front of the motorcycle 1. For the ease of illustration, the ridgeline L1 on the left side of the motorcycle 1 shown in Fig. 17 is indicated by a thick line. At least a part of the ridgeline L1 is positioned on the outer side of the light unit 30 in the vehicle widthwise direction when viewed from the front of the motorcycle 1.

As shown in Fig. 17, the ridgelines L1 and L2 form a part of the outer edge 16k of the front cover 16 when viewed from the front of the motorcycle 1. The outer edge 16k of the front cover 16 has a side surface 16v and a top surface 16u. The side surface 16v is positioned on the outer side of the light unit 30 in the vehicle widthwise direction and extends substantially in the vertical direction. The top surface 16u is connected to the upper end of the side surface 16v. The top surface 16u extends upward from the upper end of the side surface 16v and inward in the vehicle widthwise direction. The side surface 16v and the top surface 16u form the ridgeline L1 (see Fig. 9). More specifically, the ridgeline L1 is formed between the side surface 16v and the top surface 16u. Therefore, the top surface 16u extends inward in the vehicle widthwise direction from the ridgeline L1. The side surface 16v extends downward from the ridgeline L1.

As shown in Fig. 2, the inner cover 17 forms the inner wall 17a of the inner pocket 20. As shown in Fig. 11A and Figs. 12 to 14, the vehicle center C in the vehicle widthwise direction of the motorcycle 1 (see Fig. 1) is indicated by a single chain-dotted line. As shown in Fig. 12, in the horizontal section of the cover 11 where the cutwater ridgeline 16a is formed at the front cover 16, the distance Wa between the inner wall 17a of the inner pocket 20 and the center of the head pipe 2a is larger than a half of the distance Wb between the outer wall 18a of the pocket cover 18 and the center of the head pipe 2a. The distance Wa is the distance between the inner end 17az of the inner wall 17a of the inner pocket 20 and the center C of the motorcycle 1 in the vehicle widthwise direction. The distance Wb is the distance between the outer end 18az of the outer wall 18a of the pocket cover 18 and the center C of the motorcycle 1 in the vehicle widthwise direction. Note however the sizes of Wa and Wb are not particularly limited.

A speed meter cable 22, a power supply main harness 23, a front brake hose 24, an accelerator wire 25, a rear brake wire 26, and a seat lock wire 27 are inserted between the inner wall 17a of the inner pocket 20 and the head pipe 2a. When the handle 5 (see Fig. 1) is rotated, the speed meter cable 22, the main harness 23, and the front brake hose 24 rotate around the head pipe 2a within the range denoted by the single chain dotted line in Fig. 12. The seat lock wire 27 is connected between a key cylinder 21 and a seat lock mechanism (not shown). The seat lock mechanism is provided under the seat 3 shown in Fig. 1 and serves to lock the seat 3 so that the seat cannot be opened. A key 22 (see Fig. 7) inserted in the key shutter 21 is turned, the seat lock wire 27 releases the seat lock mechanism.

Referring to Figs. 11A and 12, the left inner pocket 20 is deeper than the right inner pocket 20. Since the inner wall 17a is provided more on the outer side in the downward direction, so that the inner pocket 20 has its width reduced in the downward direction. The left inner pocket 20 is wider than the right inner pocket 20. However, the left inner pocket 20 may be shallower than the right inner pocket 20 and narrower than the right inner pocket 20.

As in the foregoing, according to the present preferred embodiment, as shown in Figs. 2 and 5, the pocket cover 18 that forms the outer wall 18a of the inner pocket 20 is connected to the front cover 16 and the surface of the front cover 16 and the surface of the pocket cover 18 form substantially the same surface. Therefore, the inner pocket 20 can have a large width. The cutwater ridgeline 16a is positioned in front of the boundary (18c) between the front cover 16 and the pocket cover 18 and preferably extends in the up-down direction when viewed from the front of the motorcycle 1. Therefore, the front cover 16 can remove rain water or the like running backward on its surface by the cutwater ridgeline 16a. Therefore, when the inner pocket 20 has a large width, rain water or the like is less likely to reach the surface of the pocket cover 18 from the surface of the front cover 16. As a result, a motorcycle 1 having an inner pocket 20 having a large capacity and unlikely to let rain water enter can be provided.

According to the present preferred embodiment, as shown in Fig. 5, the ridgeline L1 of the cutwater ridgeline 16a extends backward and upward when viewed from the side of the motorcycle 1. Therefore, the front cover 16 can remove rain water or the like more on the front side in the downward direction. Therefore, the front cover 16 can remove rain water or the like more on the front side at the lower portion of the front cover 16 near the road surface that is more likely to collect rain water or the like.

According to the present preferred embodiment, as shown in Fig. 17, the width of the light unit 30 is larger than the width of the seat 3, and the ridgeline L1 is positioned on the outer side in the vehicle widthwise direction. Therefore, the front cover 16 can remove rain water or the like more on the outer side.

According to the present preferred embodiment, as shown in Fig. 9, the top surface 16u of the front cover 16 extends inward from the ridgeline L1 in the vehicle widthwise direction and the side surface 16v extends downward from the ridgeline L1. Therefore, the upper part of the front cover 16 away from the road surface can be compact.

According to the present preferred embodiment, as shown in Fig. 5, the ridgeline L2 of the cutwater ridgeline 16a extends backward and downward. Therefore, rain water or the like is unlikely to reach the legs of a rider.

According to the present preferred embodiment, as shown in Fig. 5, the trough line L5 is formed between the ridgelines L1 and L2, and the angle γ of the ridgeline L1 and the angle δ of the ridgeline L2 are small as shown in Fig. 15, so that rain water or the like can be removed more effectively.

According to the present preferred embodiment, as shown in Fig. 12, the distance Wa between the inner wall 17a of the inner pocket 20 and the center C of the head pipe 2a is larger than a half of the distance Wb between the outer wall 18a of the inner pocket 20 and the center C of the head pipe 2a. Therefore, a large storing space for the speed meter cable 22, the main harness 23, the front brake hose 24, the accelerator wire 25, the rear brake wire 26, the seat lock wire 27, and the like can be secured between the inner wall 17a of the inner pocket 20 and the head pipe 2a.

According to the present preferred embodiment, as shown in Fig. 16, since the elevation angle α is smaller than the elevation angle β, a gap forms between the front cover 16 and the pocket cover 18. Therefore, a rider can store and take out items by inserting the hand from the side of the inner pocket 20.

According to the present preferred embodiment, as shown in Fig. 16, the top edge 18d of the pocket cover 18 includes the portion 18g positioned behind the rearmost portion 16e of the front cover 16. Therefore, the inner pocket 20 has a wider opening 20b.

According to the present preferred embodiment, as shown in Figs. 16 and 17, the side edge 16 of the front cover 16 projects entirely or partly to the outer side beyond the top edge 18d of the pocket cover 18 in the vehicle widthwise direction. Therefore, rain water or the like is unlikely to come into the inner pocket 20 from above.

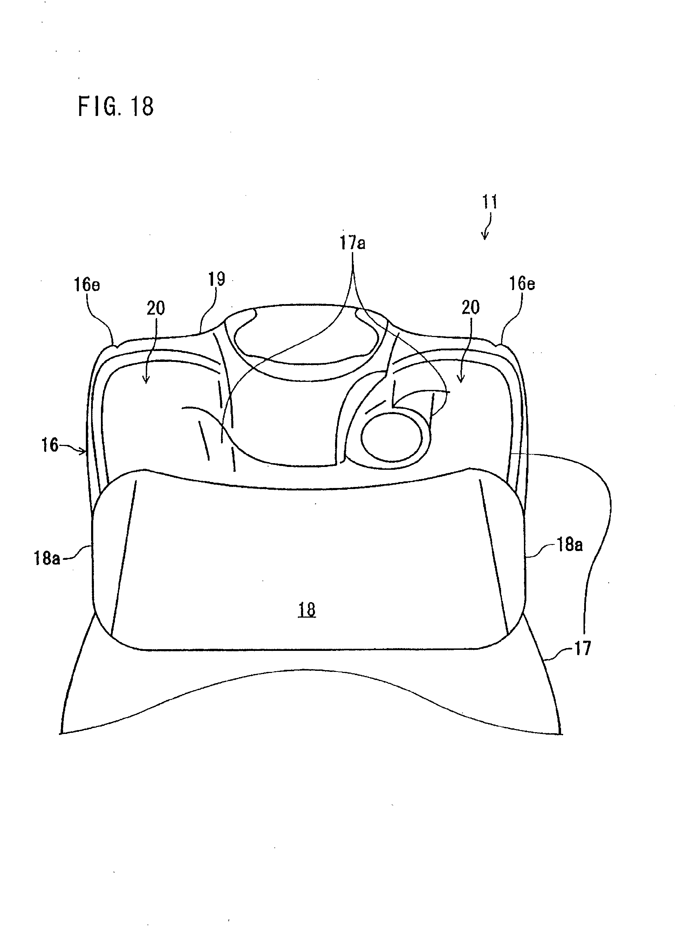

The pocket cover 18 is not limited to the arrangement as a pair on the left and right of the vehicle body. As shown in Fig. 18, the pocket cover 18 may be integrated between the left and the right. In this way, the rear side of the top edge 18d of the inner pocket 20 can be widened further toward the back.

The footboard 4 does not have to be flat and may have a projection raised upward in the center in the left-right direction. A flat surface may be formed on the left and right of the projection to receive the feet thereon. The front cover 16, the inner cover 17 or the pocket cover 18 may be divided into a plurality of pieces. More specifically, the plurality of pieces may be integrated as the front cover 16, the inner cover 17 or the pocket cover 18. The front cover 16 and the front panel 19 may be integrated. In this way, the light unit 30 may be buried in the front cover 16.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A motorcycle (1), comprising:
a head pipe (2a);
a front frame (2b) that extends backward and downward from the head pipe;
an inner pocket (20) provided around the head pipe;
an inner cover (17) attached to cover rear portions of the head pipe and the front frame and form an inner wall of the inner pocket;
a front cover (16) attached to cover front portions of the head pipe and the front frame; and
a pocket cover (18) forming an outer wall (18a) of the inner pocket,
**characterized in that**
the pocket cover (18) is connected to the front cover (16) and extends backward from the front cover (16) to form the outer wall (18a), such that a surface of the front cover and a surface of the pocket cover form substantially the same surface, and
the front cover comprises a cutwater ridgeline (16a) positioned in front of a boundary between the front cover and the pocket cover,
wherein the cutwater ridgeline extends in an up-down direction when viewed from a front of the motorcycle, wherein the cutwater ridgeline (16a) comprises a first ridgeline (L1) that extends backward and upward, and a second ridgeline (L2) that extends backward and downward from a front end of the first ridgeline (L1).

2. The motorcycle according to claim 1, further comprising:
a seat (3); and
a light unit (30) provided in front of the head pipe and exposed from the front cover,
the widest width of the light unit is greater than the widest width of the seat,
the first ridgeline being positioned outward in the vehicle widthwise direction of the light unit.

3. The motorcycle according to claim 1, further comprising:
a seat (3); and
a light unit (30) provided in front of the head pipe, exposed from the front cover and
having a width greater than that of the seat,
the front cover further comprising:
a top surface (16u) that extends inward from the first ridgeline; and
a side surface (16v) that extends downward from the first ridgeline.

4. The motorcycle according to any one of claims 1 to 3, wherein the front cover further comprises a trough line (L5) formed between the first ridgeline and the second ridgeline.

5. The motorcycle according to any one of claims 1 to 4, wherein the first and second ridgelines (L1, L2) form a part of an outer edge (16k) of the front cover 16 when viewed from the front of the motorcycle.

6. The motorcycle according to any one of claims 1 to 5, wherein a distance (Wa) between the inner wall of the inner pocket and a center of the head pipe is greater than a half of a distance (Wb) between an outer wall of the inner pocket and a center of the head pipe.

7. The motorcycle according to any one of claims 1 to 6, wherein the front cover comprises a side edge (16f) that extends backward and upward when viewed from a side of the motorcycle, and
the pocket cover comprises a top edge (18d) that extends backward and upward when viewed from a side of the motorcycle and forms an opening portion of the inner pocket a direction in which the side edge extends is above a direction in which the top edge extends.

8. The motorcycle according to claim 7, wherein the top edge comprises a portion (18g) that extends inward in the vehicle widthwise direction and is positioned behind a rearmost portion of the front cover.

9. The motorcycle according to either claim 7 or 8, wherein the side edge of the front cover projects entirely or partly outward in the vehicle widthwise direction beyond the top edge of the pocket cover.

10. The motorcycle according to any one of claims 1 to 9, further comprising:
a rear frame (2c) that extends backward from a lower portion of the front frame; and
a footboard (4) provided above the rear frame.

11. The motorcycle according to any one of claims 1 to 10, wherein the cutwater ridgeline forms a contour of the front cover when viewed from the front of the motorcycle.

## Patentansprüche

1. Motorrad (1), das umfasst:
ein Steuerrohr (2a);
einen vorderen Rahmen (2b), der sich von dem Steuerrohr nach hinten und nach unten erstreckt;
einen inneren Hohlraum (20), der um das Steuerrohr herum vorhanden ist;
eine innere Abdeckung (17), die angebracht ist, um hintere Abschnitte des Steuerrohrs und
des vorderen Rahmens abzudecken und eine Innenwand des inneren Hohlraums zu bilden;
eine vordere Abdeckung (16), die angebracht ist, um vordere Abschnitte des Steuerrohrs und des vorderen Rahmens abzudecken, und
eine Hohlraum-Abdeckung (18), die eine Außenwand (18a) des inneren Hohlraums bildet,
**dadurch gekennzeichnet, dass**
die Hohlraum-Abdeckung (18) mit der vorderen Abdeckung (16) verbunden ist und sich von der vorderen Abdeckung (16) nach hinten erstreckt und die Außenwand (18a) so bildet, dass eine Oberfläche der vorderen Abdeckung und eine Oberfläche der Hohlraum-Abdeckung im Wesentlichen die gesamte Oberfläche bilden, und
die vordere Abdeckung eine Wasserabweisungs-Erhebungslinie (16a) umfasst, die vor einer Grenze zwischen der vorderen Abdeckung und der Hohlraum-Abdeckung angeordnet ist,
wobei die Wasserabweisungs-Erhebungslinie von einer Vorderseite des Motorrads ausgesehen, in einer vertikalen Richtung verläuft,
und die WasserabweisungsErhebungslinie (16a) eine erste Erhebungslinie (L1), die nach hinten und nach oben verläuft, sowie eine zweite Erhebungslinie (L2) umfasst, die von einem vorderen Ende der ersten Erhebungslinie (L1) nach hinten und nach unten verläuft.

2. Motorrad nach Anspruch 1, das des Weiteren umfasst:
einen Sitz (3); und
eine Beleuchtungs-Einheit (30), die vor dem Steuerrohr vorhanden ist und über die vordere Abdeckung freiliegt,
wobei die größte Breite der Beleuchtungs-Einheit größer ist als die größte Breite des Sitzes,
die erste Erhebungslinie in der Fahrzeug-Breitenrichtung außerhalb der Beleuchtungs-Einheit angeordnet ist.

3. Motorrad nach Anspruch 1, das des Weiteren umfasst:
einen Sitz (3); und
eine Beleuchtungs-Einheit (30), die vor dem Steuerrohr vorhanden ist, über die vordere Abdeckung freiliegt und eine Breite hat, die größer ist als die des Sitzes,
wobei die vordere Abdeckung des Weiteren umfasst:
eine obere Fläche (16u), die sich von der ersten Erhebungslinie nach innen erstreckt; und
eine seitliche Fläche (16v), die sich von der ersten Erhebungslinie nach unten erstreckt.

4. Motorrad nach einem der Ansprüche 1 bis 3, wobei die vordere Abdeckung des Weiteren eine Vertiefungslinie (L5) umfasst, die zwischen der ersten Erhebungslinie und der zweiten Erhebungslinie ausgebildet ist.

5. Motorrad nach einem der Ansprüche 1 bis 4, wobei die erste und die zweite Erhebungslinie (L1, L2), von der Vorderseite des Motorrades aus gesehen, einen Teil einer äußeren Kante (16k) der vorderen Abdeckung (16) bilden.

6. Motorrad nach einem der Ansprüche 1 bis 5, wobei ein Abstand (Wa) zwischen der Innenwand des inneren Hohlraums und einer Mitte des Steuerrohrs größer ist als die Hälfte eines Abstandes (Wb) zwischen einer Außenwand des inneren Hohlraums und einer Mitte des Steuerrohrs.

7. Motorrad nach einem der Ansprüche 1 bis 6, wobei die vordere Abdeckung eine seitliche Kante (16f) umfasst, die sich, von einer Seite des Motorrades aus gesehen, nach hinten und nach oben erstreckt, und
die Hohlraum-Abdeckung eine obere Kante (18d) umfasst, die sich, von einer Seite des Motorrades aus gesehen, nach hinten und nach oben erstreckt und einen Öffnungsabschnitt des inneren Hohlraums bildet, wobei eine Richtung, in der sich die seitliche Kante erstreckt, oberhalb einer Richtung liegt, in der sich die obere Kante erstreckt.

8. Motorrad nach Anspruch 7, wobei die obere Kante einen Abschnitt (18g) umfasst, der sich in der Fahrzeug-Breitenrichtung nach innen erstreckt und der hinter einem hintersten Abschnitt der vorderen Abdeckung angeordnet ist.

9. Motorrad nach Anspruch 7 oder 8, wobei die seitliche Kante der vorderen Abdeckung in der Fahrzeug-Breitenrichtung vollständig oder teilweise über die obere Kante der Hohlraum-Abdeckung hinaus nach außen vorsteht.

10. Motorrad nach einem der Ansprüche 9 bis 10, das des Weiteren umfasst:
einen hinteren Rahmen (2c), der sich von einem unteren Abschnitt des vorderen Rahmens nach hinten erstreckt; und
ein Trittbrett (4), das oberhalb des hinteren Rahmens vorhanden ist.

11. Motorrad nach einem der Ansprüche 1 bis 10, wobei die Wasserabweisungs-Erhebungslinie, von der Vorderseite des Motorrades aus gesehen, eine Kontur der vorderen Abdeckung bildet.

## Revendications

1. Motocyclette (1) comprenant :
- un tube de tête (2a) ;
- un châssis avant (2b) s'étendant vers l'arrière et vers le bas depuis le tube de tête ;
- une poche intérieure (20) disposée autour du tube de tête ;
- une couverture intérieure (17) fixée à des parties arrière de couverture du tube de tête et au châssis avant et formant une paroi intérieure de la poche intérieure ;
- une couverture avant (16) fixée à des parties avant de couverture du tube de tête et au châssis avant ; et
- une couverture de poche (18) formant une paroi extérieure (18a) de la poche intérieure,
- **caractérisée en ce que** :
- la couverture de poche (18) est reliée à la couverture avant (16) et s'étend vers l'arrière depuis cette couverture avant (16) pour former la paroi extérieure (18a), de sorte qu'une surface de la couverture avant et une surface de la couverture de poche forment sensiblement la même surface ; et
- la couverture avant comprend une ligne nervurée d'avant-bec (16a) positionnée devant une limite entre la couverture avant et la couverture de poche ;
- dans laquelle la ligne nervurée d'avant-bec s'étend dans une direction de haut en bas lorsqu'elle est vue depuis un avant de la motocyclette ;
- dans laquelle la ligne nervurée d'avant-bec (16a) comprend une première ligne nervurée (L1) s'étendant vers l'arrière et vers le haut et une seconde ligne nervurée (L2) s'étendant vers l'arrière et vers le bas depuis une extrémité avant de la première ligne nervurée (L1).

2. Motocyclette selon la revendication 1, comprenant en outre :
- un siège (3) ; et
- une unité de lumière (30) disposée devant le tube de tête et exposée depuis la couverture avant ;
- la largeur la plus large de l'unité de lumière étant supérieure à la largeur la plus large du siège ; et
- la première ligne nervurée étant positionnée vers l'extérieur, dans la direction de la largeur du véhicule, de l'unité de lumière.

3. Motocyclette selon la revendication 1, comprenant en outre :
- un siège (3) ; et
- une unité de lumière (30) disposée devant le tube de tête, exposée depuis la couverture avant et ayant une largeur plus importante que celle du siège,
- la couverture avant comprenant en outre :
- une surface supérieure (16u) s'étendant vers l'intérieur depuis la première ligne nervurée ; et
- une surface latérale (16v) s'étendant vers le bas depuis la première ligne nervurée.

4. Motocyclette selon l'une quelconque des revendications 1 à 3, dans laquelle la couverture avant comprend en outre une ligne de creux (L5) formée entre la première ligne nervurée et la seconde ligne nervurée.

5. Motocyclette selon l'une quelconque des revendications 1 à 4, dans laquelle les première et seconde lignes nervurées (L1, L2) forment une partie d'un bord extérieur (16k) de la couverture avant (16) lorsqu'elle est vue depuis l'avant de la motocyclette.

6. Motocyclette selon l'une quelconque des revendications 1 à 5, dans laquelle une distance (Wa) entre la paroi intérieure de la poche intérieure et un centre du tube de tête est plus importante qu'une moitié d'une distance (Wb) entre une paroi extérieure de la poche intérieure et un centre du tube de tête.

7. Motocyclette selon l'une quelconque des revendications 1 à 6, dans laquelle :
- la couverture avant comprend un bord latéral (16f) s'étendant vers l'arrière et vers le haut lorsqu'il est vu depuis un côté de la motocyclette ; et
- la couverture de poche comprend un bord supérieur (18d) qui s'étend vers l'arrière et vers le haut, lorsqu'il est vu depuis un côté de la motocyclette, et forme une partie d'ouverture de la poche intérieure,
- une direction dans laquelle s'étend le bord latéral est située au-dessus d'une direction dans laquelle s'étend le bord supérieur.

8. Motocyclette selon la revendication 7, dans laquelle le bord supérieur comprend une partie (18g) s'étendant vers l'intérieur dans la direction de la largeur du véhicule et positionnée derrière une partie la plus en arrière de la couverture avant.

9. Motocyclette selon les revendications 7 ou 8, dans laquelle le bord latéral de la couverture avant se projette entièrement ou partiellement vers l'extérieur dans la direction de la largeur du véhicule au-delà du bord supérieur de la couverture de poche.

10. Motocyclette selon l'une quelconque des revendications 1 à 9, comprenant en outre :
- un châssis arrière (2c) s'étendant vers l'arrière depuis une partie inférieure du châssis avant ; et
- un panneau de pied (4) disposé au-dessus du châssis arrière.

11. Motocyclette selon l'une quelconque des revendications 1 à 10, dans laquelle la ligne nervurée d'avant-bec forme un profil de la couverture avant lorsqu'elle est vue depuis l'avant de la motocyclette.
